Europäisches Patentamt

European Patent Office

Office européen des brevets

(11) Publication number: **0 428 882 A2**

# EUROPEAN PATENT APPLICATION

(21) Application number: 90120285.3

(22) Date of filing: 23.10.90

(51) Int. Cl.5: **C08G 59/22**, C08G 59/42, C08G 59/72, H01B 3/40

(30) Priority: 20.11.89 US 438904

(43) Date of publication of application:
29.05.91 Bulletin 91/22

(84) Designated Contracting States:
DE FR GB NL

(71) Applicant: **GENERAL ELECTRIC COMPANY**
**1 River Road**
**Schenectady New York 12305(US)**

(72) Inventor: **Lee, Walter J.**
**257 State Street**
**Albany, New York 12210(US)**
Inventor: **Shultz, Allan Reed**
**111 Acorn Drive**
**Scotia, New York 12302(US)**
Inventor: **Kaiser, Jocelyn Claire**
**251 Park Place**
**Schenectady, New York 12305(US)**
Inventor: **Young, Ann Leona**
**24 Spring Road**
**Scotia, New York 12302(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) Polyepoxide potting resin compositions and electrically conductive coils impregnated therewith.

(57) Compositions comprising a bisphenol diglycidyl ether, an inner anhydride of a dicarboxylic acid, a diglycidyl ether of a $C_{3-6}$ aliphatic diol and a specifically defined boron trichloride-trialkylamine adduct are useful as potting resins for electrically conductive coils, especially superconducting magnet coils. They have low viscosity at relatively low temperatures and cure rapidly at temperatures in the range of about 80-100°C.

EP 0 428 882 A2

Xerox Copy Centre

EP 0 428 882 A2

## POLYEPOXIDE POTTING RESIN COMPOSITIONS AND ELECTRICALLY CONDUCTIVE COILS IMPREG-NATED THEREWITH

This invention relates to polyepoxide compositions, and more particularly to blends thereof useful as potting compositions for electrical and magnetic coils.

Electrically conductive coils, particularly superconducting magnet coils, are tightly wound structures which may include conducting layers and insulating materials separating said conducting layers. For example, a typical superconducting magnet coil comprises coils of superconducting and non-superconducting wire, ribbon or tape wound in parallel in a helical configuration, with successive layers of the helix being separated by glass fiber cloth. The entire assembly is ordinarily encapsulated in a so-called "potting resin" which is capable of being cured to a thermoset material. Typical potting resins are polyepoxide compositions, which are effective to insulate the conductive elements in the coil and to maintain dimensional stability.

Polyepoxide potting resins generally contain, in addition to the curable polyepoxide components, various hardeners, accelerators and diluents therefor. The choice of these materials must be made with an eye to the conditions under which the coil will be impregnated and subsequently treated. It is necessary to ensure that in the impregnation operation the potting resin thoroughly impregnates the coils and insulating layers, forming an essentially void-free structure which can then be rapidly cured without undergoing a highly exothermic reaction. In order to facilitate impregnation, relatively low viscosity of the potting resin prior to curing is often essential.

In typical magnet impregnation operations of the prior art, individual portions of the magnet coil were impregnated and subsequently assembled into the final superconducting structure. It was possible to impregnate said portions in a relatively short time, and consequently it was possible to heat the potting resin to a relatively high temperature at which its viscosity permitted thorough impregnation without causing substantial curing prior to the completion thereof.

More recently, however, it has been of interest to fabricate and impregnate an entire superconducting magnet cylinder, typically on the order of two meters in axial length, in a single operation. This results in much more stringent conditions which must be met by the potting resin. Two of these conditions will now be more completely described.

The first condition is easy flowability at relatively low temperatures, typically on the order of 50-80 $^\circ$ C. This is necessary so that the resin can be introduced at low viscosity into the system containing the superconducting coil, facilitating flow into the interstices in the coil and the insulating layers to produce a curable article which is essentially void-free.

The second condition is curability of the resin at temperatures higher than those which prevail during introduction of said resin into the coil, but low enough for easy attainment. In a typical impregnation operation, the coil is subjected to successive low and high pressure cycles to ensure that a substantially void-free structure is obtained, said cycles involving temperatures on the order of 80 $^\circ$ C. It is necessary for curing to proceed in a deliberate fashion at such temperatures, without pronounced exotherms which may result in the reaction getting out of hand. To be useful in such processes, therefore, an ideal potting resin should be essentially inert and yet flowable at 50 $^\circ$ C, should begin curing at a measurable rate at temperatures on the order of 80 $^\circ$ C and cure rapidly at about 100 $^\circ$ C.

Typical potting resin compositions of the prior art include, in addition to the polyepoxide components and hardeners and accelerators therefor, diluents such as styrene. Reference is made, for example, to U.S. Patent 4,603,182. Relatively volatile diluents of this type are effective to decrease viscosity, but substantial proportions thereof may be lost during low pressure cycling periods and as the potting resin is heated to higher temperatures at which rapid curing takes place. As a result, undesirable thickening and compositional variability may be encountered prior to completion of curing.

The present invention provides curable polyepoxide compositions which satisfy the above-summarized conditions. In particular, they have low viscosity at relatively low temperatures, enabling them to substantially completely impregnate a large conductive coil under relatively trouble-free conditions. They also are characterized by a relatively narrow "window" between the temperature at which low viscosity is attained and that at which curing takes place. The invention also provides thermoset compositions derived from said resin blends, and electrically conductive coil assemblies impregnated with said polyepoxide compositions and with thermoset products obtained therefrom.

In one of its aspects, therefore, the invention includes curable polyepoxide compositions comprising:

(A) 100 parts of at least one diglycidyl ether of a bisphenol;

(B) about 60-150 parts of at least one inner anhydride of a dicarboxylic acid;

2

(C) about 5-50 parts of at least one diglycidyl ether of an aliphatic diol containing from 3 to about 6 carbon atoms; and

(D) about 0.1-1.0%, based on the total of reagents A, B and C, of at least one adduct of boron trichloride and a trialkylamine containing about 8-16 carbon atoms and having one alkyl group with at least about 6 carbon atoms; all parts and percentages being by weight.

As used herein with reference to reagent A, the term "bisphenol" designates a compound containing two hydroxy-substituted aromatic rings separated by intervening structure. Typical bisphenols have the formula

(I)    $HO-A^1-Y-A^2-OH$,

wherein each of $A^1$ and $A^2$ is a monocyclic divalent aromatic radical and Y is a bridging radical in which one or two atoms separate $A^1$ from $A^2$. The $O-A^1$ and $A^2-O$ bonds in formula I are usually in the meta or para positions of $A^1$ and $A^2$ in relation to Y.

The $A^1$ and $A^2$ values may be unsubstituted phenylene or substituted derivatives thereof, illustrative substituents (one or more) being alkyl, nitro, alkoxy and the like. Unsubstituted phenylene radicals are preferred. Each of $A^1$ and $A^2$ may, for example, be o- or m-phenylene and the other p-phenylene, but both are preferably p-phenylene.

The bridging radical, Y, is one in which one or two atoms, preferably one, separate $A^1$ from $A^2$. It is most often a hydrocarbon radical and particularly a saturated radical such as methylene, cyclohexylmethylene, ethylene, isopropylidene, neopentylidene, cyclohexylidene or cyclopentadecylidene, especially a gem-alkylene (alkylidene) radical and most preferably isopropylidene. Also included, however, are radicals which contain atoms other than carbon and hydrogen; for example, carbonyl, oxy, thio, sulfoxy and sulfone. An espe cially preferred bisphenol is bisphenol A in which $A^1$ and $A^2$ are each p-phenylene and Y is isopropylidene.

Reagent A is a diglycidyl ether of a bisphenol such as that of formula I, and therefore may have the formula

$$(II) \quad \overset{O}{\overset{\diagup \diagdown}{CH_2-CHCH_2}}-O-A^1-Y-A^2-O-CH_2-\overset{O}{\overset{\diagup \diagdown}{CH-CH_2}}$$

wherein $A^1$, $A^2$ and Y are as previously defined. Also obtainable by the reaction, for example, of epichlorohydrin with bisphenol A are higher condensation products including hydroxypropylene moieties separating bisphenol moieties, but such higher condensation products are too viscous to be employed in the compositions of this invention.

The preferred compound for reagent A is the diglycidyl ether of bisphenol A. It is commercially available from numerous sources. Thus, it is the major constituent of "Epon 828" epoxy composition of Shell Chemical and "Araldite GY 6005" of Ciba-Geigy Corp.

Reagent B, which serves as a hardener for the polyepoxy compounds in the composition, is at least one inner anhydride of a dicarboxylic acid. By "inner anhydride" is meant an intramolecular compound formed by elimination of water from two carboxy groups in the same molecule. Alicyclic and aromatic anhydrides are preferred; they include phthalic anhydride, tetrahydrophthalic anhydride and nadic methyl anhydride (i.e., methyl-4-endomethylene tetrahydrophthalic anhydride). Nadic methyl anhydride is often preferred; it is commercially available, for example, from Ciba-Geigy under the designation "Hardener HY 906".

Reagent C is at least one diglycidyl ether of an aliphatic diol containing from 3 to about 6 carbon atoms, and preferably 4-6 carbon atoms. Thus, the suitable diols are illustrated by propylene glycol, trimethylene glycol, tetramethylene glycol and hexamethylene glycol. At least 3 carbon atoms are required in the diol since below that number, the diglycidyl ethers are too volatile to function adequately at curing temperatures. The preferred diglycidyl ether is that of tetramethylene glycol, which is available from Ciba-Geigy under the designation "Araldite RD-2"

Reagent C serves as a reactive diluent for the potting resin. While decreasing the viscosity thereof at lower temperatures, it is not appreciably volatile and becomes incorporated in the cured product under curing conditions rather than being lost by evaporation.

A critical aspect of the invention is the identity of reagent D, which serves as a latent curing accelerator. It is at least one adduct of boron trichloride and a trialkylamine, the latter containing about 8-16 carbon atoms and having one alkyl group with at least about 6 carbon atoms. Thus, boron trichloride adducts of such amines as octyldimethylamine, decyldimethylamine, dodecyldimethylamine and octyldiethylamine

EP 0 428 882 A2

may be employed. The preferred adducts are those of the various isomers of octyldimethylamine, with the n-octyl isomer being most preferred; it is available from Ciba-Geigy under the designation "Accelerator DY 9577". The latent accelerators are inert at impregnation temperatures, but dissociate at curing temperatures into boron trichloride and the trialkylamine; the former, a Lewis acid, serves as the principal accelerating species.

As previously noted, curable compositions of this invention contain about 60-150 parts of reagent B and about 5-50 parts of reagent C per 100 parts of reagent A, all parts being by weight. Preferably, about 80-120 parts of reagent B and about 10-25 parts of reagent C are present. The accelerator, reagent D, is present in the amount of about 0.1-1.0% and preferably about 0.3-0.6% by weight, based on the total of reagents A, B and C.

In fabricating superconductive assemblies by "back pressure impregnation", the conducting coil is typically placed in an oven capable of operation under vacuum, which is then evacuated and heated (typically to about 100°C) to remove any moisture which may be present. An inert gas such as carbon dioxide is then passed into the oven to increase the pressure, typically to about 12 torr, and the temperature is lowered to about 80°C.

At the same time, the curable composition of this invention is prepared by blending in a suitable mixer at atmospheric temperature and pressure, and is then heated to about 50°C with a reduction in pressure to about 12 torr, whereupon the viscosity is reduced and the composition becomes an easily flowable liquid. Just prior to the introduction of the curable composition into the oven, the pressure in the mixer is increased to about 100 torr to facilitate transfer. The curable composition then passes into the oven and impregnates the conductive coil therein.

After the initial impregnation operation, the oven is put through several cycles of increased and decreased pressure, involving introduction of an inert gas such as carbon dioxide or nitrogen to increase the pressure to 600-760 torr followed by reduction of the pressure again to 12 torr. This cycling sequence, carried out at a temperature on the order of 80°C, facilitates impregnation and decreases the proportion of voids in the impregnated structure. A period of about 18-20 hours from the time of introduction of the curable composition to completion of the pressure cycling steps is typical. The temperature and pressure are then increased to about 100°C and 600-760 torr, respectively, for a final curing period on the order of 14-20 hours.

The compositions of this invention are illustrated by one having the following constitution, all parts being by weight:
Bisphenol A diglycidyl ether - 100 parts.
Nadic methyl anhydride - 100 parts.
Tetramethylene glycol diglycidyl ether - 18.5 parts.
Boron trichloride-octyldimethylamine adduct -0.874 part.
This composition had an initial viscosity of 31 centipoise at 80°C, increasing to 104 cp. after 12 hours and 227 cp. after 24 hours; it gelled in 36 hours. At 90°, it reached 144 cp. after 6 hours and gelled in 12 hours. By contrast, a control composition not containing the tetramethylene glycol diglycidyl ether had an initial viscosity of 106 cp. at 60°C, increasing only to 130 cp. after 18 hours and 205 cp. after 60 hours. It failed to gel in 142 hours.

Thus, it is apparent that the curable compositions of this invention have low viscosity at relatively low temperatures and cure slowly but measurably during pressure cycling at about 80°C and expeditiously at about 100°C, making them particularly suitable for impregnation of superconducting magnet coils. Other aspects of the invention are cured compositions prepared therefrom and electrically conductive coils impregnated with said curable and cured compositions.


**Claims**

1. A curable polyepoxide composition comprising:
(A) 100 parts of at least one diglycidyl ether of a bisphenol;
(B) about 60-150 parts of at least one inner anhydride of a dicarboxylic acid;
(C) about 5-50 parts of at least one diglycidyl ether of an aliphatic diol containing from 3 to about 6 carbon atoms; and
(D) about 0.1-1.0%, based on the total of reagents A, B and C, of at least one adduct of boron trichloride and a trialkylamine containing about 8-16 carbon atoms and having one alkyl group with at least about 6 carbon atoms;
all parts and percentages being by weight.

4

2. A composition according to claim 1 wherein reagent A is bisphenol A diglycidyl ether.

3. A composition according to claim 1 wherein reagent B is nadic methyl anhydride.

4. A composition according to claim 1 wherein reagent C is tetramethylene glycol diglycidyl ether.

5. A composition according to claim 1 wherein reagent D is a boron trichloride-octyldimethylamine adduct.

6. A composition according to claim 1 which comprises about 80-120 parts of reagent B, about 10-25 parts of reagent C and about 0.3-0.6% of reagent D.

7. A composition according to claim 6 wherein reagent A is bisphenol A diglycidyl ether, reagent B is nadic methyl anhydride, reagent C is tetramethylene glycol diglycidyl ether and reagent D is a boron trichloride-octyldimethylamine adduct.

8. A composition according to claim 7 wherein component D is the adduct of boron trichloride and n-octyldimethylamine.

9. A curable polyepoxide composition comprising 100 parts of bisphenol A diglycidyl ether, 100 parts of nadic methyl anhydride, 18.5 parts of tetramethylene glycol diglycidyl ether and 0.874 part of the adduct of boron trichloride and n-octyldimethylamine, all parts being by weight.

10. A cured composition prepared by heating the composition of anyone of claims 1 to 9 at a temperature in the range of about 80-100° C.

11. An article of manufacture comprising an electrically conductive coil impregnated with the curable composition of anyone of the claims 1 to 9.